# FASCICULE DE BREVET EUROPEEN

(11) **EP 2 813 610 B1**
(45) Date de publication et mention de la délivrance du brevet: **13.04.2016**
(21) Numéro de dépôt: 14172084.7
(22) Date de dépôt: 12.06.2014
(51) Int. Cl.: D04H 1/4242, D04H 1/46, D04H 1/498, D04H 18/00, D04H 18/02, F16D 69/02

(54) **Dispositif d'entraînement par aiguilles d'une nappe fibreuse hélicoïdale à aiguilleter**
Zugvorrichtung mit nadeln für zu vernadelnde spiralförmige faserbahn
A drive device using needles to drive a helical fiber sheet for needling

(30) Priorité: 13.06.2013 FR 1355507
(43) Date de publication de la demande: 17.12.2014
(73) Titulaire: Messier-Bugatti-Dowty, 78140 Vélizy-Villacoublay (FR)
(72) Inventeur: Gautier, Patrice, 38290 FRONTONAS (FR)
(74) Mandataire: Boura, Olivier

(56) Documents cités:
- EP-A1- 2 339 055
- EP-A1- 2 341 175
- WO-A1-97/20092
- WO-A1-02/088449
- WO-A1-02/088451
- WO-A1-03/100148
- WO-A1-2005/111292
- US-A- 5 662 855

## Description

### Arrière-plan de l'invention

La présente invention se rapporte au domaine général des machines d'aiguilletage circulaire pour la réalisation de structures textiles aiguilletées à partir d'une nappe fibreuse hélicoïdale. Elle concerne plus particulièrement le dispositif d'entraînement de la nappe fibreuse hélicoïdale équipant une telle machine d'aiguilletage.

Il est connu d'utiliser une machine d'aiguilletage circulaire pour la fabrication de structures textiles annulaires destinées à constituer le renfort fibreux de pièces annulaires en matériau composite, notamment des disques de frein, tels que des disques en matériau composite/carbone (C/C) pour des freins d'avion.

Une machine d'aiguilletage circulaire comprend généralement une table d'aiguilletage ayant une surface supérieure horizontale sur laquelle est amenée la nappe fibreuse hélicoïdale à aiguilleter. Des rouleaux permettent d'entraîner par friction la nappe fibreuse en rotation autour d'un axe vertical. La nappe ainsi mise en rotation passe devant une tête d'aiguilletage qui surplombe un secteur angulaire de la surface supérieure de la table d'aiguilletage. Cette tête d'aiguilletage est animée d'un mouvement de va-et-vient vertical et porte des aiguilles qui viennent prélever des fibres dans les couches empilées de la nappe fibreuse pour les transférer à travers celles-ci et assurer ainsi une liaison entre les différentes couches de la nappe fibreuse. On pourra se référer au document WO 02/088449 qui décrit un exemple de réalisation d'une telle machine d'aiguilletage.

Ce type de machine d'aiguilletage présente un dispositif d'entraînement de la nappe fibreuse par friction au moyen de rouleaux coniques disposés au-dessus de la table d'aiguilletage. Or, ce type d'entraînement présente un certain nombre d'inconvénients. En particulier, il nécessite de recourir à un guide sur le diamètre extérieur de la nappe de manière à maintenir celle-ci autour de son axe de rotation pendant son déplacement. De plus, ce guide et les rouleaux engendrent des contraintes sur la nappe fibreuse. Enfin, l'entraînement s'effectuant par friction, le positionnement angulaire de la nappe sur la table d'aiguilletage est incertain.

### Objet et résumé de l'invention

La présente invention a donc pour but principal de pallier de tels inconvénients en proposant un dispositif qui assure un entraînement précis et répétable de la nappe fibreuse, sans pour autant appliquer de contraintes trop importantes sur celle-ci.

Conformément à l'invention, ce but est atteint grâce à un dispositif d'entraînement d'une nappe fibreuse hélicoïdale à aiguilleter, comprenant une table d'aiguilletage ayant une surface supérieure fixe destinée à recevoir une nappe fibreuse hélicoïdale à aiguilleter, un plateau circulaire positionné sous la surface supérieure de la table d'aiguilletage et sur lequel sont montées verticalement une pluralité d'aiguilles d'entraînement traversant la table d'aiguilletage et faisant saillies par rapport à la surface supérieure de celle-ci, lesdites aiguilles d'entraînement étant positionnées selon au moins un diamètre du plateau, et des moyens d'entraînement en rotation du plateau par rapport à la surface supérieure de la table d'aiguilletage autour d'un axe vertical.

Le dispositif selon l'invention est remarquable en ce qu'il assure un entraînement de la nappe fibreuse autour de son axe vertical de rotation par des aiguilles d'entraînement. Celles-ci font saillies verticalement hors de la table d'aiguilletage et sont animées d'un mouvement de rotation par rapport à la table d'aiguilletage. Ainsi, l'entraînement de la nappe fibreuse s'effectue sans glissement, ce qui permet d'obtenir un positionnement angulaire précis de la nappe sur la table d'aiguilletage. En outre, ce type d'entraînement ne génère pas de contraintes de guidage ou d'entraînement sur la nappe et ne nécessite pas l'ajout de guide sur la table d'aiguilletage.

De préférence, la table d'aiguilletage comprend une zone d'aiguilletage, le dispositif comprenant alors des moyens d'escamotage des aiguilles d'entraînement au niveau de la zone d'aiguilletage de la table d'aiguilletage. L'escamotage des aiguilles d'entraînement dans cette zone d'aiguilletage permet d'éviter toute interférence entre les aiguilles d'entraînement et les aiguilles de transfert des fibres.

A cet effet, chaque aiguille d'entraînement peut être montée coulissante dans un fourreau vertical solidaire du plateau circulaire, le dispositif comprenant en outre un loquet de descente apte à abaisser l'aiguille d'entraînement dans son fourreau à son approche de la zone d'aiguilletage et un loquet de remontée apte à relever l'aiguille d'entraînement à sa sortie de la zone d'aiguilletage.

Dans ce cas, le dispositif peut comprendre un capteur destiné à détecter la présence d'une aiguille d'entraînement à l'approche ou à la sortie de la zone d'aiguilletage pour actionner les loquets de descente et de remontée. Chaque fourreau peut comprendre des moyens de blocage de l'aiguille d'entraînement en position relevée.

La surface supérieure de la table d'aiguilletage peut comprendre au moins une fente circulaire pour permettre le passage des aiguilles d'entraînement.

De préférence, les aiguilles d'entraînement sont positionnées selon deux diamètres concentriques du plateau. Ces diamètres correspondent sensiblement aux diamètres extérieur et intérieur de la nappe fibreuse à aiguilleter.

Dans ce cas, les aiguilles d'entraînement peuvent être solidaires de porte-aiguilles (pouvant être au nombre de douze) montés sur le plateau, chaque porte-aiguille supportant deux aiguilles d'entraînement positionnées chacune selon un diamètre différent du plateau.

Les moyens d'entraînement en rotation du plateau comprennent avantageusement un moteur pas à pas couplé à un arbre vertical de rotation du plateau. Ce type de moteur permet d'assurer une avance discontinue de la nappe avec un arrêt à chaque descente de la table d'aiguilletage.

L'invention a également pour objet une machine d'aiguilletage circulaire d'une structure textile formée à partir d'une nappe fibreuse hélicoïdale, comprenant un dispositif d'entraînement tel que défini précédemment.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- les figures 1 et 2 sont des vues en perspective d'un dispositif d'entraînement selon l'invention ;
- la figure 3 est une vue de dessus du dispositif d'entraînement des figures 1 et 2 ;
- les figures 4A et 4B montrent, en vue de côté, le fonctionnement du dispositif d'entraînement des figures 1 à 3 ; et
- la figure 5 est une autre vue de côté du dispositif d'entraînement selon l'invention.

### Description détaillée de l'invention

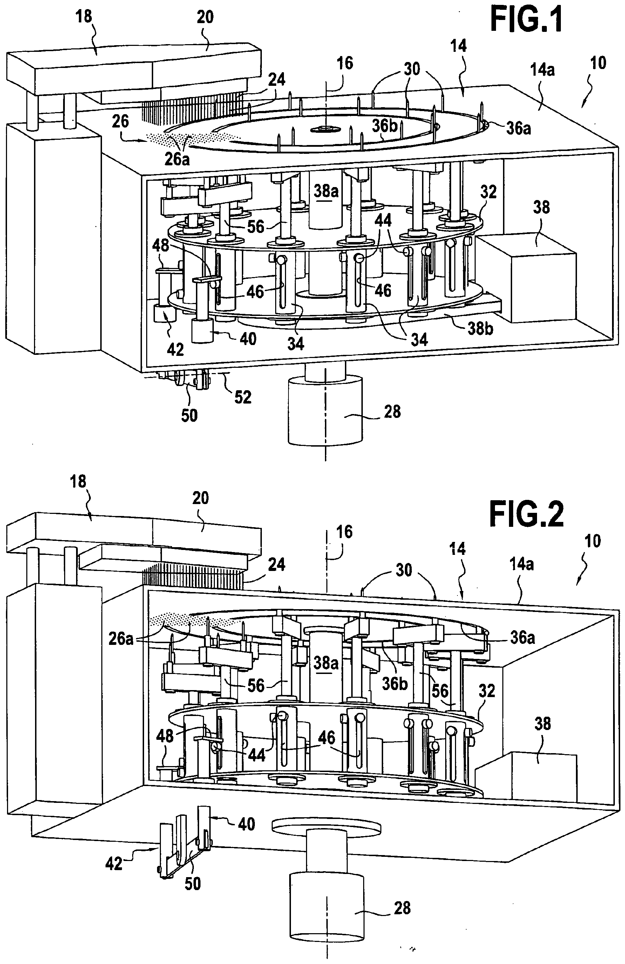

Les figures 1 à 5 représentent un dispositif d'entraînement 10 conforme à l'invention équipant une machine d'aiguilletage circulaire pour la réalisation de structures textiles aiguilletées à partir d'une nappe fibreuse hélicoïdale.

L'invention s'applique à tout processus d'aiguilletage circulaire dans lequel des couches (ou strates) d'une nappe fibreuse sont empilées et aiguilletées sur un plateau pour former une préforme fibreuse aiguilletée de forme annulaire.

Ces couches peuvent être formées préalablement par des anneaux ou des secteurs d'anneau juxtaposés découpés dans un tissu ou un matériau non tissé de fibres unidirectionnelles ou multidirectionnelles. Elles peuvent aussi être formées par des spires enroulées à plat à partir d'un dispositif d'alimentation tel que celui décrit dans la demande de brevet WO 02/088449, ou par des spires formées à partir de tresses déformées, ou encore par des spires formées à partir d'une texture bidimensionnelle déformable (tresse ou tissu hélicoïdal).

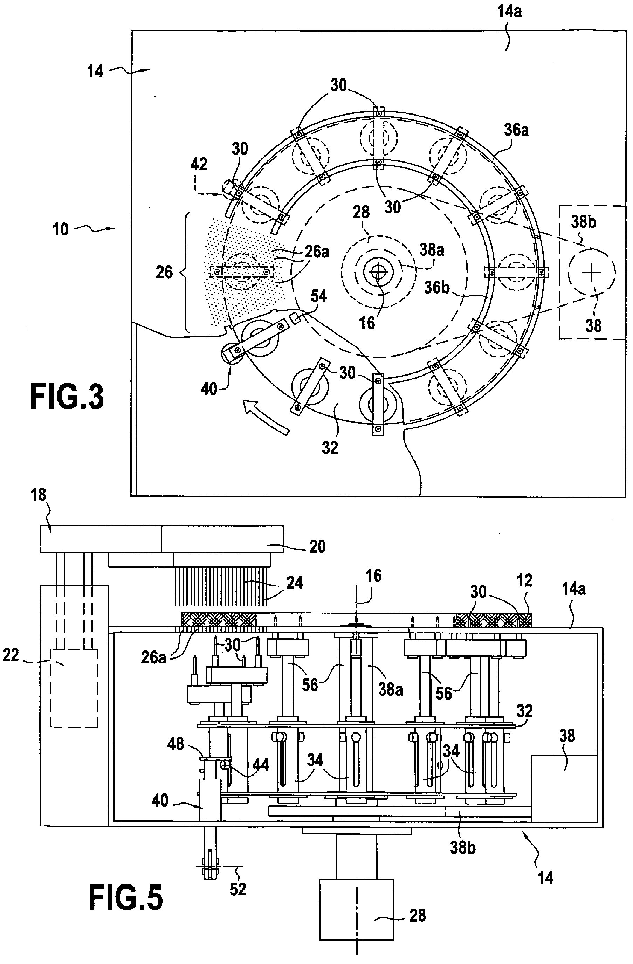

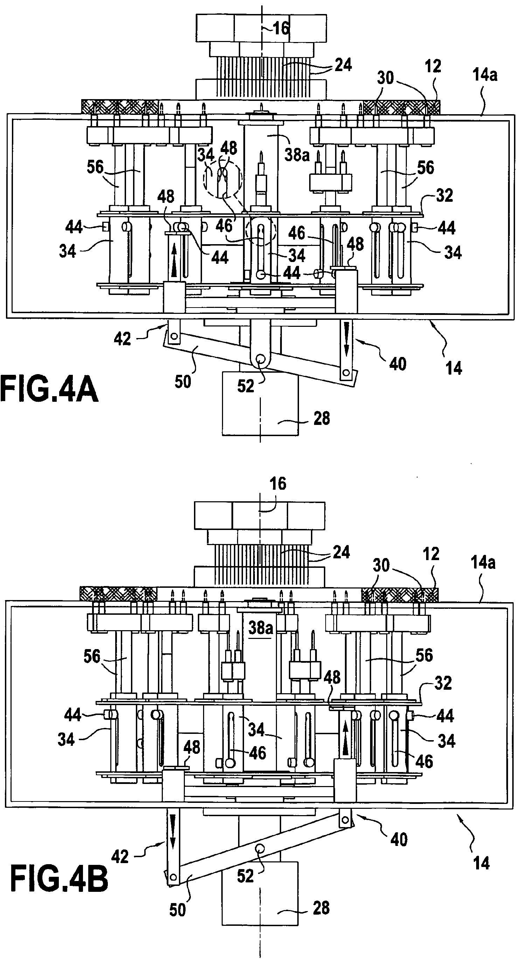

Des couches superposées de nappe fibreuse hélicoïdale à aiguilleter 12 (figures 4A-4B et 5) viennent reposer directement sur la surface supérieure horizontale fixe 14a d'une table d'aiguilletage 14 de la machine d'aiguilletage. Ces couches de nappe fibreuse à aiguilleter sont entraînées en rotation autour d'un axe vertical 16 par l'intermédiaire d'un dispositif d'entraînement décrit ultérieurement.

De façon connue en soi, la nappe fibreuse 12 mise en rotation passe devant un dispositif d'aiguilletage 18 comprenant notamment une tête d'aiguilletage 20 qui surplombe un secteur angulaire prédéterminé de la surface supérieure 14a de la table d'aiguilletage 14. Cette tête d'aiguilletage est animée d'un mouvement vertical de va-et-vient par rapport à la table d'aiguilletage au moyen d'un système d'actionnement 22 (par exemple de type bielle-manivelle - figure 5).

La tête d'aiguilletage 20 porte un nombre déterminé d'aiguilles de transfert de fibres 24 qui sont munies de barbes, crochets ou fourches pour prélever des fibres dans les couches empilées de la nappe fibreuse et les transférer à travers celles-ci lorsqu'elles pénètrent dans la préforme. A cet effet, la surface supérieure 14a de la table d'aiguilletage comporte une zone d'aiguilletage 26 formée par une série de perforations verticales 26a localisées en regard des aiguilles de transfert de fibres 24 de la tête d'aiguilletage pour le passage de celles-ci lors de l'aiguilletage des premières couches de la nappe fibreuse 12.

Par ailleurs, à chaque aiguilletage d'une nouvelle strate, la surface supérieure 14a de la table d'aiguilletage est déplacée verticalement, par l'intermédiaire de moyens moteur 28 adéquats, d'un pas de descente déterminé correspondant à l'épaisseur d'une couche aiguilletée.

Selon l'invention, l'entraînement en rotation de la nappe fibreuse 12 autour de l'axe vertical 16 est réalisé par l'intermédiaire d'aiguilles d'entraînement 30 se déplaçant selon un mouvement circulaire sous la nappe fibreuse.

A cet effet, la table d'aiguilletage 14 comprend un plateau circulaire 32 positionné sous sa surface supérieure 14a et sur lequel sont montées verticalement une pluralité d'aiguilles d'entraînement 30 traversant la table d'aiguilletage et faisant saillies par rapport à la surface supérieure de celle-ci, le plateau circulaire étant animé d'un mouvement de rotation autour de son axe de symétrie vertical (confondu avec l'axe vertical 16).

Plus précisément, chaque aiguille d'entraînement 30 est montée coulissante dans un fourreau vertical 34 solidaire du plateau 32. Ces aiguilles d'entraînement traversent des fentes circulaires 36a, 36b pratiquées dans la surface supérieure 14a de la table d'aiguilletage et sont tournées vers le haut.

Dans l'exemple de réalisation représenté sur les figures, il est prévu que les aiguilles d'entraînement 30 soient réparties selon deux fentes circulaires 36a, 36b concentriques correspondant à deux diamètres concentriques du plateau 32. Le diamètre de la fente 36a la plus extérieure est légèrement inférieur au diamètre extérieur de la nappe fibreuse à aiguilleter et le diamètre de la fente 36b la plus intérieure est légèrement supérieur au diamètre intérieur de la nappe fibreuse.

Le plateau 32 portant les aiguilles d'entraînement 30 est mis en rotation par l'intermédiaire d'un moteur 38 couplé à un arbre vertical 38a de rotation. Il peut s'agir par exemple d'un moteur électrique pas à pas (visible notamment sur les figures 3, 4A et 4B) couplé à l'arbre 38a par une courroie de transmission 38b. Ce type de moteur permet d'assurer une avance discontinue de la nappe avec un arrêt à chaque descente de la table d'aiguilletage.

Par ailleurs, les aiguilles d'entraînement 30 dépassent de la surface supérieure 14a de la table d'aiguilletage 14 d'une hauteur qui correspond au moins à deux fois l'épaisseur d'une couche de la nappe fibreuse à aiguilleter. Ainsi, les deux premières couches de la nappe fibreuse qui sont déposées sur la table d'aiguilletage sont pénétrées par les aiguilles d'entraînement et entraînées en rotation par celles-ci autour de l'axe vertical 16.

Compte tenu de la présence de la zone d'aiguilletage 26 formée sur la surface supérieure 14a de la table d'aiguilletage en regard des aiguilles de transfert de fibres de la tête d'aiguilletage, il est nécessaire d'escamoter les aiguilles d'entraînement 30 au niveau de cette zone d'aiguilletage.

A cet effet, le dispositif d'entraînement 10 comprend en outre un loquet de descente 40 apte à abaisser l'aiguille d'entraînement 30 dans son fourreau 34 à son approche de la zone d'aiguilletage 26 de sorte à ce qu'elle ne dépasse plus de la surface supérieure 14a de la table d'aiguilletage, et un loquet de remontée 42 apte à relever l'aiguille d'entraînement à sa sortie de cette zone d'aiguilletage.

Plus précisément, comme représenté sur les figures 4A et 4B, chaque aiguille d'entraînement 30 peut coulisser dans son fourreau 34 entre une position abaissée et une position relevée grâce à un ergot 44 faisant saillie latéralement hors du fourreau et solidaire de l'aiguille d'entraînement. Sous l'actionnement des loquets de descente 40 et de remontée 42, cet ergot se déplace dans une gorge verticale 46 pratiquée dans le fourreau 34 entre la position abaissée et la position relevée. L'ergot 44 est maintenu bloqué dans la position relevée, par exemple par l'intermédiaire de lames 48 formant ressort disposées à l'intérieur du fourreau dans sa partie supérieure (voir la loupe de la figure 4A).

Le loquet de descente 40 est positionné à l'intérieur de la table d'aiguilletage au niveau de l'extrémité angulaire de la zone d'aiguilletage 26 correspondant à l'entrée des aiguilles d'entraînement 30 dans cette zone. De même, le loquet de montée 42 est positionné au niveau de l'autre extrémité angulaire de la zone d'aiguilletage 26 correspondant à la sortie des aiguilles d'entraînement 30 de cette zone.

Les loquets de descente 40 et de remontée 42 sont des tiges mobiles verticalement dont l'extrémité supérieure est munie d'une platine 48 venant coopérer avec l'ergot 44 de l'aiguille d'entraînement 30 se présentant devant lui pour l'abaisser ou le relever.

Ces loquets 40, 42 sont de préférence liés l'un à l'autre de sorte que l'abaissement du loquet de descente 40 entraîne la remontée du loquet de remontée 42 (et vice-versa). Par exemple, les extrémités inférieures de ces loquets peuvent être reliées l'une à l'autre par une tige 50 pivotante autour d'un axe horizontal 52 passant par un plan médian de la tige 50.

Le basculement des loquets 40, 42 est réalisée à l'aide d'un moteur (non représenté sur les figures) couplé à un capteur 54 (figure 3) destiné à détecter la présence d'une aiguille d'entraînement 30 à l'approche ou à la sortie de la zone d'aiguilletage 28.

Par exemple, comme illustré sur la figure 3, un tel capteur 54 pourra être positionné au voisinage du loquet de descente 40. Dans ce cas, lorsqu'une aiguille d'entraînement 30 passe devant ce capteur 54, celui-ci active les loquets 40, 42 provoquant la descente de l'aiguille d'entraînement en question et la remontée simultanée de l'aiguille d'entraînement située face au loquet de remontée 42 en sortie de la zone d'aiguilletage 26 (figure 4A). Une fois l'aiguille d'entraînement abaissée dans son fourreau, les loquets 40, 42 sont à nouveau activés pour permettre la remontée du loquet de descente et la descente du loquet de remontée avant l'arrivée de l'aiguille d'entraînement suivante (figure 4B).

Bien entendu, il est possible d'envisager une configuration dans laquelle le capteur de présence est positionné au voisinage du loquet de descente. Dans ce cas, c'est le passage d'une aiguille d'entraînement devant ce capteur en sortie de la zone d'aiguilletage qui déclenchera le basculement des loquets. De même, il est possible d'envisager un système dans lequel les loquets de montée et de descente sont activés indépendamment l'un de l'autre, chaque loquet étant associé à un capteur de présence pour déclencher son basculement.

Selon une disposition particulière du dispositif d'entraînement, les aiguilles d'entraînement 30 sont solidaires de porte-aiguilles 56 montés sur le plateau 32, chaque porte-aiguille supportant deux aiguilles d'entraînement 30 positionnées chacune selon un diamètre différent du plateau.

En d'autres termes, chaque porte-aiguille 56 supporte deux aiguilles d'entraînement, l'une se déplaçant dans la fente extérieure 36a pratiquée dans la surface supérieure 14a de la table d'aiguilletage, l'autre se déplaçant dans la fente intérieure 36b.

Selon une autre disposition particulière du dispositif d'entraînement, celui-ci comprend douze porte-aiguilles 56 régulièrement réparties autour de l'axe vertical 16 de rotation de la nappe fibreuse.

Bien entendu, ce nombre pourrait varier notamment en fonction de l'application choisie et des dimensions de la nappe fibreuse à aiguilleter.

Le fonctionnement d'un tel dispositif d'entraînement peut être le suivant. L'extrémité de la première couche de nappe fibreuse à aiguilleter est positionnée sur la table d'aiguilletage en l'accrochant sur au moins quatre aiguilles d'entraînement. La rotation des aiguilles d'entraînement est déclenchée pour faire faire un tour complet à la nappe fibreuse sans aiguilletage. L'aiguilletage est alors démarré à vitesse réduite pour les deux premières couches, puis la table d'aiguilletage est descendue d'un pas. L'aiguilletage des N couches suivantes s'effectue alors à vitesse normale avec une descente de la table d'aiguilletage à la fin de chaque tour.

## Revendications

1. Dispositif d'entraînement (10) d'une nappe fibreuse hélicoïdale (12) à aiguilleter, comprenant :
une table d'aiguilletage (14) ayant une surface supérieure fixe (14a) destinée à recevoir une nappe fibreuse hélicoïdale à aiguilleter ;
un plateau circulaire (32) positionné sous la surface supérieure de la table d'aiguilletage et sur lequel sont montées verticalement une pluralité d'aiguilles d'entraînement (30) traversant la table d'aiguilletage et faisant saillies par rapport à la surface supérieure de celle-ci, lesdites aiguilles d'entraînement étant positionnées selon au moins un diamètre du plateau ; et
des moyens (38) d'entraînement en rotation du plateau par rapport à la surface supérieure de la table d'aiguilletage autour d'un axe vertical (16).

2. Dispositif selon la revendication 1, dans lequel la table d'aiguilletage (14) comprend une zone d'aiguilletage (26), le dispositif comprenant en outre des moyens d'escamotage (40, 42) des aiguilles d'entraînement (30) au niveau de la zone d'aiguilletage de la table d'aiguilletage.

3. Dispositif selon la revendication 2, dans lequel chaque aiguille d'entraînement (30) est montée coulissante dans un fourreau vertical (34) solidaire du plateau circulaire (32), le dispositif comprenant en outre un loquet de descente (40) apte à abaisser l'aiguille d'entraînement dans son fourreau à son approche de la zone d'aiguilletage (26) et un loquet de remontée (42) apte à relever l'aiguille d'entraînement à sa sortie de la zone d'aiguilletage.

4. Dispositif selon la revendication 3, comprenant un capteur (54) destiné à détecter la présence d'une aiguille d'entraînement (30) à l'approche ou à la sortie de la zone d'aiguilletage (26) pour actionner les loquets de descente (40) et de remontée (42).

5. Dispositif selon l'une des revendications 3 et 4, dans lequel chaque fourreau (34) comprend des moyens de blocage (48) de l'aiguille d'entraînement en position relevée.

6. Dispositif selon l'une quelconque des revendications 1 à 5, dans lequel la surface supérieure (14a) de la table d'aiguilletage (14) comprend au moins une fente circulaire (36a, 36b) pour permettre le passage des aiguilles d'entraînement (30).

7. Dispositif selon l'une quelconque des revendications 1 à 6, dans lequel les aiguilles d'entraînement (30) sont positionnées selon deux diamètres concentriques du plateau.

8. Dispositif selon la revendication 7, dans lequel les aiguilles d'entraînement (30) sont solidaires de porte-aiguilles (56) montés sur le plateau (32), chaque porte-aiguille supportant deux aiguilles d'entraînement positionnées chacune selon un diamètre différent du plateau.

9. Dispositif selon la revendication 8, comprenant douze porte-aiguilles (56).

10. Dispositif selon l'une quelconque des revendications 1 à 9, dans lequel les moyens d'entraînement en rotation du plateau comprennent un moteur pas à pas (38) couplé à un arbre (38a) vertical de rotation du plateau.

11. Machine d'aiguilletage circulaire d'une structure textile formée à partir d'une nappe fibreuse hélicoïdale, comprenant un dispositif d'entraînement (10) selon l'une quelconque des revendications 1 à 10.

## Patentansprüche

1. Vorrichtung zum Antreiben (10) einer zu nadelnden spiralförmigen Faserbahn (12), umfassend:
einen Nadelungstisch (14), der eine feste obere Fläche (14a) aufweist, die dazu bestimmt ist, eine zu nadelnde spiralförmige Faserbahn aufzunehmen,
eine Rundplatte (32), die unter der oberen Fläche des Nadelungstisches positioniert ist und auf der eine Vielzahl von Antriebsnadeln (30), welche den Nadelungstisch durchgreifen und gegenüber seiner oberen Fläche vorspringen, vertikal angebracht ist, wobei die Antriebsnadeln entsprechend wenigstens einem Durchmesser der Platte positioniert sind, sowie
Mittel (38) zum Drehantreiben der Platte gegenüber der oberen Fläche des Nadelungstisches um eine vertikale Achse (16).

2. Vorrichtung nach Anspruch 1, wobei der Nadelungstisch (14) einen Nadelungsbereich (26) umfasst, wobei die Vorrichtung ferner Mittel zum Einziehen (40, 42) der Antriebsnadeln (30) in Höhe des Nadelungsbereiches des Nadelungstisches umfasst.

3. Vorrichtung nach Anspruch 2, wobei jede Antriebsnadel (30) in einer mit der Rundplatte (32) fest verbundenen vertikalen Hülse (34) verschieblich angebracht ist, wobei die Vorrichtung ferner eine Senkklinke (40), welche geeignet ist, die Antriebsnadel bei ihrer Annäherung an den Nadelungsbereich (26) in ihrer Hülse abzusenken, sowie eine Hebeklinke (42), die geeignet ist, die Antriebsnadel bei ihrem Austritt aus dem Nadelungsbereich hochzuheben, umfasst.

4. Vorrichtung nach Anspruch 3, umfassend einen Sensor (54), der dazu bestimmt ist, das Vorliegen einer Antriebsnadel (30) bei Annäherung an den oder bei Austritt aus dem Nadelungsbereich (26) zu erfassen, um die Senk- (40) und Hebeklinken (42) zu betätigen.

5. Vorrichtung nach einem der Ansprüche 3 und 4, wobei jede Hülse (34) Mittel zum Blockieren (48) der Antriebsnadel in angehobener Position umfasst.

6. Vorrichtung nach einem der Ansprüche 1 bis 5, wobei die obere Fläche (14a) des Nadelungstisches (14) wenigstens einen kreisförmigen Schlitz (36a, 36b) umfasst, um den Durchgang der Antriebsnadeln (30) zu ermöglichen.

7. Vorrichtung nach einem der Ansprüche 1 bis 6, wobei die Antriebsnadeln (30) entsprechend zweier konzentrischer Durchmesser der Platte positioniert sind.

8. Vorrichtung nach Anspruch 7, wobei die Antriebsnadeln (30) mit auf der Platte (32) angebrachten Nadelhaltern (56) fest verbunden sind, wobei jeder Nadelhalter zwei Antriebsnadeln trägt, die jeweils entsprechend einem anderen Durchmesser der Platte positioniert sind.

9. Vorrichtung nach Anspruch 8, umfassend zwölf Nadelhalter (56).

10. Vorrichtung nach einem der Ansprüche 1 bis 9, wobei die Mittel zum Drehantreiben der Platte einen Schrittmotor (38), der mit einer vertikalen Drehwelle (38a) der Platte gekoppelt ist, umfassen.

11. Maschine zum Rundnadeln einer aus einer spiralförmigen Faserbahn gebildeten Textilstruktur, umfassend eine Antriebsvorrichtung (10) nach einem der Ansprüche 1 bis 10.

## Claims

1. A drive device (10) for driving a helical fiber sheet (12) for needling, the device comprising:
a needling table (14) having a stationary top surface (14a) for receiving a helical fiber sheet for needling;
a circular turntable (32) positioned under the top surface of the needling table and having a plurality of drive needles (30) vertically mounted thereon, the drive needles passing through the needling table and projecting relative to its top surface, said drive needles being positioned on at least one diameter of the turntable; and
drive means (38) for driving the turntable in rotation relative to the top surface of the needling table about a vertical axis (16).

2. A device according to claim 1, wherein the needling table (14) has a needling zone (26), the device further including means (40, 42) for retracting the drive needles (30) in the needling zone of the needling table.

3. A device according to claim 2, wherein each drive needle (30) is slidably mounted in a vertical sheath (34) secured to the circular turntable (32), the device further including a lowering plunger (40) suitable for lowering the drive needle into its sheath on approaching the needling zone (26), and a raising plunger (42) suitable for raising the drive needle on leaving the needling zone.

4. A device according to claim 3, having a sensor (54) for detecting the presence of a drive needle (30) approaching or leaving the needling zone (26) in order to actuate the lowering and raising plungers (40 and 42).

5. A device according to claim 3 or claim 4, wherein each sheath (34) includes means (48) for blocking the drive needle in the raised position.

6. A device according to any one of claims 1 to 5, wherein the top surface (14a) of the needling table (14) includes at least one circular slot (36a, 36b) for allowing the drive needles (30) to pass.

7. A device according to any one of claims 1 to 6, wherein the drive needles (30) are positioned on two concentric diameters of the turntable.

8. A device according to claim 7, wherein the drive needles (30) are secured to needle carriers (56) mounted on the turntable (32), each needle carrier supporting two drive needles, each positioned on a different diameter of the turntable.

9. A device according to claim 8, having twelve needle carriers (56).

10. A device according to any one of claims 1 to 9, wherein the means for driving the turntable in rotation comprise a stepper motor (38) coupled to a vertical rotary shaft (38a) of the turntable.

11. A circular needling machine for needling a textile structure made from a helical fiber sheet, the machine including a drive device (10) according to any one of claims 1 to 10.
